Europäisches Patentamt

**European Patent Office**

Office européen des brevets

(19)

(11) Veröffentlichungsnummer: **0 060 332**
**B1**

(12) **EUROPÄISCHE PATENTSCHRIFT**

(45) Veröffentlichungstag der Patentschrift:
**29.01.86**

(51) Int. Cl.⁴: **H 04 Q 11/04**

(21) Anmeldenummer: **81109048.9**

(22) Anmeldetag: **27.10.81**

(54) **Zeitmultiplexkoppelfeldeinheit zur Raumvermittlung.**

(30) Priorität: **13.03.81 DE 3109808**

(43) Veröffentlichungstag der Anmeldung:
**22.09.82 Patentblatt 82/38**

(45) Bekanntmachung des Hinweises auf die Patenterteilung:
**29.01.86 Patentblatt 86/5**

(84) Benannte Vertragsstaaten:
**AT CH FR GB IT LI SE**

(56) Entgegenhaltungen:
**EP - A - 0 010 726**

**COMMUTATION & ELECTRONIQUE, Heft 43, Oktober 1973, Seiten 52-70, Issy-Les-Moulineaux, FR. P. VOYER et al.: "Reseaux de connexion temporels a grande capacite"**

(73) Patentinhaber: **Siemens Aktiengesellschaft, Berlin und München Wittelsbacherplatz 2, D-8000 München 2 (DE)**

(72) Erfinder: **Binz, Reiner, Dipl.-Ing., Rosenstrasse 5, D-8021 Hohenschäftlarn (DE)**
Erfinder: **Knorpp, Eberhard, Dipl.-Ing., Zugspitzstrasse 26, D-8035 Gauting (DE)**
Erfinder: **von Sichart, Frithjof, Dr. Dipl.-Phys., Karl-Theodor-Strasse 72, D-8000 München 40 (DE)**

EP 0 060 332 B1

## Beschreibung

Die Erfindung betrifft eine Zeitmultiplexkoppelfeldeinheit für den Anschluss mehrerer PCM-Leitungen, durch die eine Zuordnung von auf PCM-Leitungen für ankommende Übertragungsrichtung benutzten Zeitkanälen zu auf PCM-Leitungen für abgehende Übertragungsrichtung benutzten Zeitkanälen durch zyklisches Einschreiben der ankommenden PCM-Worte in die Speicherzellen ihres Informationsspeichers und durch entsprechend verzögertes wahlfreies Auslesen der abgehenden PCM-Worte aus diesen Speicherzellen bewirkt wird, die aus einer Mehrzahl gleicher Koppelfeldbausteine mit jeweils eigener Speicheransteuereinrichtung besteht, wobei die Anzahl dieser Koppelfeldbausteine der Quotient aus der Anzahl der Eingänge und der Ausgänge eines Koppelfeldbausteins ist, deren gleichgeordnete Eingänge für den Anschluss von PCM-Leitungen für ankommende Übertragungsrichtung miteinander verbunden sind und die eine geringere Anzahl von Ausgängen für den Anschluss von PCM-Leitungen für abgehende Übertragungsrichtung aufweisen als Eingänge.

Die Koppelfeldbausteine einer bekannten Zeitmultiplexkoppelfeldeinheit dieser Art («Commutation & Electronique», Heft 43, Oktober 1973, Seiten 52–70) dienen dazu, sowohl eine räumliche als auch eine zeitliche Zuordnung zwischen Zeitkanälen auf PCM-Leitungen für ankommende Übertragungsrichtung zu Zeitkanälen auf PCM-Leitungen für abgehende Übertragungsrichtung herzustellen, sie üben also die Funktion einer kombinierten Zeit-Raum-Stufe aus. Zu diesem Zweck entspricht ihre jeweilige Speicherkapazität der Anzahl der auf den angeschlossenen PCM-Leitungen für ankommende Übertragungsrichtung je Pulsrahmen insgesamt gebildeten PCM-Wortzeitspannen, im Falle eines Anschlusses von beispielsweise 64 PCM-Leitungen für ankommende Übertragungsrichtung eines PCM-Systems 30/32 mit 32 Zeitkanälen je Pulsrahmen weisen sie also eine Speicherkapazität von 2048 Wortspeicherzellen auf.

Vom Aufwand her wäre es am günstigsten, ein ganzes Koppelfeld durch eine einzige solche Koppelfeldeinheit zu realisieren.

Sowohl von der Technologie als auch von den Betriebsverhältnissen her kann jedoch ein bestimmter Wert der Anschlusszahlen nicht ohne weiteres überschritten werden, was insbesondee dann gilt, wenn solche Koppelfeldeinheiten in integrierter Schaltkreistechnik aufgebaut werden sollen.

Koppelfelder, an die mehr PCM-Leitungen angeschlossen werden sollen, als Anschlüsse bei einer Koppelfeldeinheit vorhanden sind, und die dementsprechend mehrere Koppelfeldeinheiten umfassen, können als einstufige oder als mehrstufige Anordnung konzipiert sein. Bei einer bekannten einstufigen Anordnung («Commutation & Electronique», No. 40, Januar 1973, S. 14–40) besteht das Koppelfeld aus wenigstens 2 einstufigen Koppelfeldteilen, die jeweils so viele Koppelfeldeinheiten wie Koppelfeldteile umfassen und bei denen die an die Koppelfeldeinheiten angeschlossenen Zeitmultiplexleitungen für ankommende Übertragungsrichtung auch mit jeweils einem Eingang einer Koppelfeldeinheit jedes anderen Koppelfeldteils in Verbindung stehen. Bei einer derartigen Koppelfeldkonzeption führt allerdings eine Vergrösserung der Anschlusszahlen zu einer quadratischen Zunahme der Anzahl der verwendeten Koppelfeldeinheiten.

Zumindest vom Aufwand an erforderlichen Koppelfeldeinheiten her sind die genannten mehrstufigen Koppelfelder günstiger. Im Hinblick auf einen blockierungsfreien Betrieb genügt es, ei solchen mehrstufigen Koppelfeldern, wenn in der eingangsseitigen und in der ausgangsseitigen Stufe Zeitkanalumsetzungen möglich sind. Die dazwischenliegenden Stufen hingegen können reine Raum-Koppelstufen sein. Der Aufbau eines mehrstufigen Koppelfeldes aus lauter gleichen Koppelfeldeinheiten, die, wie oben ausgeführt, in vollem Umfang sowohl eine räumliche als auch eine zeitliche Zuordnung von Zeitkanälen bewirken können, stellt daher einen unnötigen Aufwand dar.

Es besteht also einerseits ein Interesse an Koppelfeldeinheiten, die reine Raumkoppelstufen sind, dabei technologisch aber mit den vorgenannten auf der Basis von Zeitverschiebungen arbeitenden Zeit-Raum-Stufen weitgehend übereinstimmen.

Mehrstufige unter Verwendung von Koppelfeldeinheiten aufgebaute Koppelfelder sind zwar vom Aufwand an Koppelfeldeinheiten her günstiger als die genannten einstufigen Koppelfelder, sie bedingen allerdings grössere Durchschaltelaufzeiten und einen grösseren Aufwand bei der Einstellsteuerung.

Es besteht daher ferner ein Interesse an Raum-Koppeleinheiten der vorgenannten Art, bei denen eine grössere Anzahl von PCM-Leitungen angeschlossen werden kann, als dies bisher aus den vorgenannten Gründen der Fall war, damit wenn schon ein mehrstufiger Aufbau erforderlich ist, wenigstens die Stufenzahl klein gehalten werden kann.

Es ist daher Aufgabe der Erfindung, eine Zeitmultiplexkoppelfeldeinheit der eingangs genannten Art anzugeben, die vorwiegend als Raum-Koppeleinheit arbeitet und bei der auch im Fall einer Ausführung in integrierter Schaltkreistechnik eine grössere Anzahl von PCM-Leitungen angeschlossen werden kann, als dies bisher der Fall war.

Erfindungsgemäss wird diese Aufgabe bei einer solchen Zeitmultiplexkoppelfeldeinheit dadurch gelöst, dass deren Informationsspeicher eine geringere Speicherkapazität aufweisen als es der Anzahl der auf den angeschlossenen PCM-Leitungen für ankommende Übertragungsrichtung je Pulsrahmen insgesamt gebildeten PCM-Wortzeitspannen entspricht, wobei bei sämtlichen Koppelfeldbausteinen (BS0 bis BS15) das wahlfreie Auslesen der abgehenden PCM-Worte derart gesteuert ist, dass die Zeitverzögerung gegenüber dem zyklischen Einschreiben der ankommenden PCM-Worte vorzugsweise innerhalb eines Zeitkanalfachs liegt, die Koppelfeldeinheit somit vorwiegend als Raum-Koppeleinheit arbeitet.

Die eingangs erwähnten betriebmässig bedingten Beschränkungen der an eine Koppelfeldeinheit anschliessbaren PCM-Leitungen besteht insbesondere im Hinblick auf das wahlfreie Auslesen aus den Informationsspeichern dieser Koppelfeldeinheiten, wogegen im Hinblick auf das zyklische Einschreiben wesentlich grössere Anschlusszahlen zugelassen werden könnten. Da bei der erfindungsgemässen Zeitmultiplexkoppelfeldeinheit die einzelnen Bausteine eine geringere Anzahl von Ausgängen, auf die wahlfrei ausgelesen wird, als Eingänge aufweist, über die das zyklische Einschreiben erfolgt, kann die Anzahl der an die Eingänge der Koppelfeldeinheit angeschlossenen PCM-Leitungen für ankommende Übertragungsrichtung wesentlich grösser als üblich sein, da die bausteinindividuellen Speichersteuereinrichtungen nur wenige, im Extremfall sogar nur eine einzige PCM-Leitung für abgehende Übertragungsrichtung zu bedienen haben. Dennoch stellt die Gesamtheit der Bausteine, die die erfindungsgemässe Koppelfeldeinheit bilden, eine Anordnung dar, die ein blockierungsfreies Durchschalten gewährleistet. Wegen der bezüglich der je Pulsrahmen insgesamt über die PCM-Leitungen für ankommende Übertragungsrichtung anlieferbaren ankommenen PCM-Worten geringeren Speicherkapazität der Informationsspeicher der einzelnen Informationsspeicher ist eine Zeitkanalumsetzung entweder gar nicht oder nur bedingt möglich, sie wird aber auch der Zielsetzung der Erfindung entsprechend gar nicht in erster Linie angestrebt.

Gegenüber einem anderen Lösungsvorschlag, demgemäss auch in den zwischen eingangsseitigen und ausgangsseitigen Koppelfeldstufen liegenden Koppelfeldstufen Zeitmultiplexkoppelfeldeinheiten verwendet werden, die sowohl eine zeitliche als auch eine räumliche Zuordnung von Zeitkanälen bewirken, also Zeit-Raum-Koppelfeldeinheiten sind, und die ebenfalls aus mehreren Koppelfeldbausteinen gebildet werden, bringt die Verwendung der erfindungsgemässen Koppeleinheit in einem Koppelfeld abgesehen von den angestrebten Besonderheiten der reinen Raum-Koppelfunktion eine Einsparung an Speicherplatz.

Nachstehend wird die Erfindung anhand eines Ausführungsbeispiels unter Bezugnahme auf zwei Figuren näher erläutert.

Die Figur 1 zeigt einen Baustein, wie er zum Aufbau der erfindungsgemässen Zeitmultiplexkoppelfeldeinheit Verwendung findet.

Die Figur 2 zeigt in vereinfachter Blockschaltbildform eine aus solchen Bausteinen aufgebaute erfindungsgemässe Zeitmultiplexkoppelfeldeinheit.

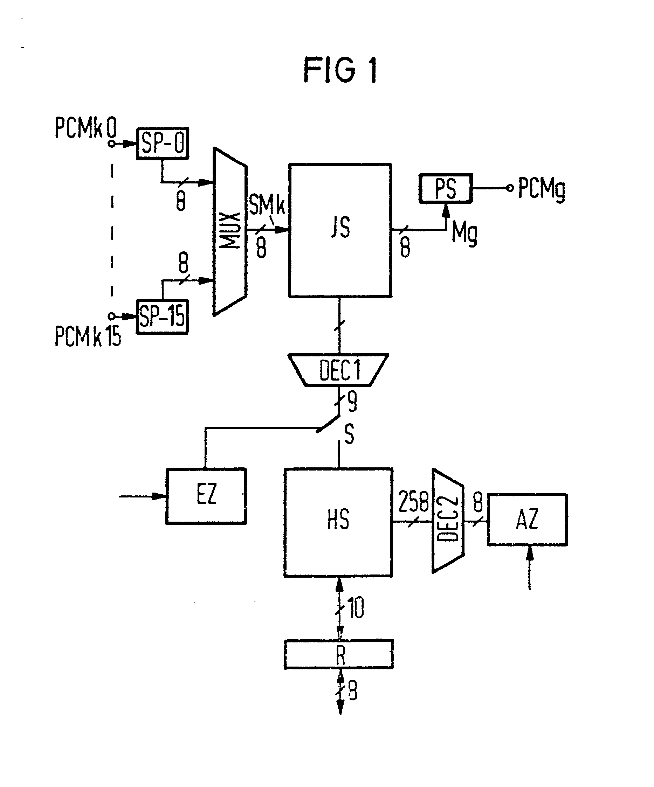

An den Koppelfeldbausteinen gemäss Figur 1 sind 16 PCM-Leitungen für ankommende Übertragungsrichtung PCMk0 bis PCMk15 sowie eine PCM-Leitung für abgehende Übertragungseinrichtung PCMg angeschlossen. Der Zugang der PCM-Leitungen für ankommende Übertragungsrichtung erfolgt über leitungsindividuelle Serien-Parallel-Wandler SP0 bis SP15, durch die jeweils die auf den PCM-Leitungen seriell auftretenden Bits der PCM-Worte in Parallelform umgewandelt werden. Die Serien-Parallel-Wandler weisen demnach jeweils 8 Ausgangsleitungen auf.

Diese Ausgangsleitungen führen zu einem Multiplexer MUX, der die in Parallelform auftretenden PCM-Worte auf einer Supermultiplexleitung SMk vereinigt, die ebenfalls 8 Leitungsadern aufweist.

Diese Supermultiplexleitung führt zu einem Informationsspeicher IS, der hier so viele Speicherzellen für jeweils ein PCM-Wort aufweist, wie PCM-Leitungen für ankommende Übertragungsrichtung angeschlossen sind, hier also 16 PCM-Wort-Speicherzellen.

Das Einschreiben der auf den PCM-Leitungen PCMk0 bis PCMk15 ankommenden PCM-Wörter in den Informationsspeicher IS erfolgt zyklisch, wozu ein Eingangszähler EZ über einen Decoder Dec1 die entsprechenden Ansteueradressen für die Informationsspeicherzellen liefert.

Das Auslesen der PCM-Worte aus dem Informationsspeicher IS erfolgt, wie angedeutet, wahlfrei. Zur Lieferung der entsprechenden Ansteueradressen dient ein Haltespeicher HS, in dessen Speicherzellen die Ansteueradressen für den Informationsspeicher enthalten sind. Die Speicherzellen des Haltespeichers HS werden von einem Ausgangszähler AZ und über einen Decoder Dec2 zyklisch angesteuert. Sie geben hierbei über den Schalter S und den schon genannten Decoder Dec1 die erwähnten Ansteueradressen an den Informationsspeicher IS ab, durch die dessen Speicherzellen zum Zwecke des Auslesens angesteuert werden.

Die aus dem Informationsspeicher IS ausgelesenen PCM-Worte gelangen zunächst in Parallelform über die 8-adrige Leitung Mg an einen Parallel-Serien-Wandler PS und von da an eine PCM-Leitung für abgehende Übertragungsrichtung PCMg.

Weitere Bestandteile des Koppelfeldbausteins gemäss Figur 1 ist eine Registeranordnung R, die eine Schnittstelle zu einer Koppelfeldsteuerung, beispielsweise in Form eines μ-Prozessors, darstellt, von dem aus im Zusammenhang mit dem Aufbau neuer Verbindungen jeweils entsprechende Informationsspeicheradressen in den Haltespeicher HS eingetragen werden.

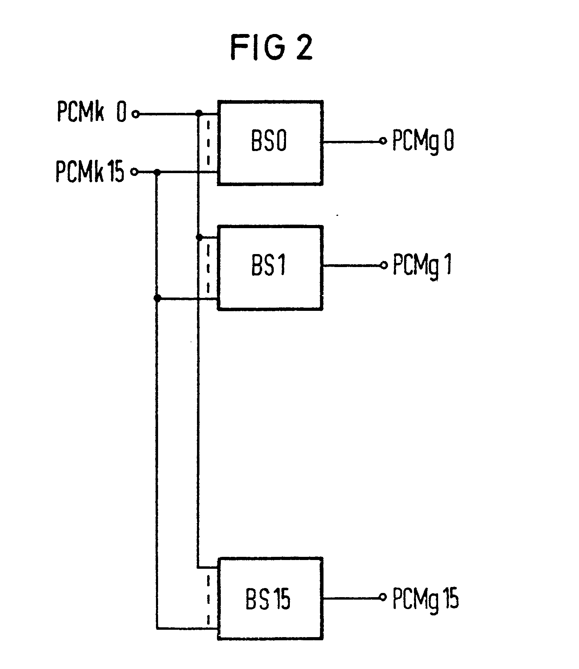

Gemäss Figur 2 sind 16 der in Figur 1 dargestellten Koppelfeldbausteine BS0 bis BS15 dadurch zu einer erfindungsgemässen Koppelfeldeinheit vereinigt, dass jeweils gleichgeordnete Eingänge für den Anschluss von PCM-Leitungen für ankommende Übertragungsrichtung miteinander verbunden sind. Damit ist eine Koppelfeldeinheit entstanden, an die 16 PCM-Leitungen für ankommende Übertragungsrichtung und 16 PCM-Leitungen für abgehende Übertragungsrichtung angeschlossen werden können und die ein blockierungsfreies Durchschalten von jeder der PCM-Leitungen von ankommender Übertragungsrichtung zu jeder der PCM-Leitungen für abgehende Übertragungsrichtung ermöglicht.

Im Zuge einer derartigen Verbindung gelangen die auf den 15 angeschlossenen PCM-Leitungen für ankommende Übertragungsrichtung ankommenden PCM-Worte jeweils in der Teilzeitspanne eines Zeitkanalfachs, die sie auf den Supermultiplexleitungen SMk der einzelnen Bausteine einnehmen, in die diesen Unterzeitspannen zugeordneten Speicherzellen der Informationsspeicher sämtlicher der Bausteine BS0 bis BS15. Ein Auslesen aus diesen Speicherzellen noch während desselben Zeitkanalfachs erfolgt jedoch lediglich bei einem der Bausteine, nämlich bei demjenigen, zu dessen angeschlossener PCM-Leitung für abgehende Übertragungsrichtung hin das betrachtete PCM-Wort räumlich vermittelt werden soll, was dadurch erreicht wird, dass lediglich der zu diesem Baustein gehörige Haltespeicher HS in seiner dem betreffenden Zeitkanal zugeordneten Speicherzelle eine Ansteueradresse für die betreffende Speicherzelle enthält, in der das betrachtete PCM-Wort im Informationsspeicher steht.

In Abweichung von den geschilderten Verhältnissen können die einzelnen Speicher und Bausteine auch so ausgelegt sein, dass an sie mehrere PCM-Leitungen für abgehende Übertragungsrichtung angeschlossen sind in welchem Falle ausgangsseitig noch ein Demultiplexer erforderlich ist, der die ausgelesenen PCM-Worte von einer der Leitung Ma entsprechenden Supermultiplexleitung, über die alle diese PCM-Worte geleitet werden, auf die angeschlossenen PCM-Leitungen verteilt. In diesem Falle sind weniger Koppelfeldbausteine erforderlich, wobei sich deren Anzahl als Quotient aus der Anzahl der Eingänge und der Ausgänge eines Koppelfeldbausteins ergibt. Andererseits müssen dann allerdings die Haltespeicher eine entsprechend grössere Anzahl von Ansteueradressen je Pulsrahmen liefern können, also eine dementsprechend grössere Speicherkapazität haben.

Im Hinblick auf die Verwendung derartiger Koppelfeldeinheiten in Koppelfeldern, die auch Koppelfeldeinheiten enthalten, die in vollem Umfang sowohl der zeitlichen als auch der räumlichen Vermittlung dienen und die gemäss einer vorgeschlagenen Lösung ebenfalls aus mehreren solcher Bausteine bestehen, kann ausserdem im Interesse einer Typeneinheitlichkeit die Anzahl der Speicherzellen der Informationsspeicher grösser sein als die Anzahl der angeschlossenen PCM-Leitungen, so dass auch in geringem Umfang Zeitkanalumsetzungen möglich sind, wodurch einer ggf. vorhandenen Blockierungsgefahr begegnet werden kann. Die auch dann noch bestehende Unterdimensionierung der Speicherkapazität der Informationsspeicher ergibt sich in diesem Fall dadurch, dass PCM-Leitungen angeschlossen werden, auf denen PCM-Worte mit einer höheren Übertragungsfrequenz auftreten.

**Patentanspruch**

1. Zeitmultiplexkoppelfeldeinheit für den Anschluss mehrerer PCM-Leitungen, durch die eine Zuordnung von auf PCM-Leitungen für ankommende Übertragungsrichtung (PCMk0 bis PCMk15) benutzten Zeitkanälen zu auf PCM-Leitungen für abgehende Übertragungsrichtung (PCMg0 bis PCMg15) benutzten Zeitkanälen durch zyklisches Einschreiben der ankommenden PCM-Worte in die Speicherzellen ihres Informationsspeichers (IS) und durch entsprechend verzögertes wahlfreies Auslesen der abgehenden PCM-Worte aus diesen Speicherzellen bewirkt wird, die aus einer Mehrzahl gleicher Koppelfeldbausteine (BS0 bis BS15) mit jeweils eigener Speicheransteuereinrichtung (HS) besteht, wobei die Anzahl dieser Koppelfeldbausteine der Quotient aus der Anzahl der Eingänge und der Ausgänge eines Koppelfeldbausteins ist, deren gleichgeordnete Eingänge für den Anschluss von PCM-Leitungen für ankommende Übertragungsrichtung (PCMk0 bis PCMk15) miteinander verbunden sind und die eine geringere Anzahl von Ausgängen für den Anschluss von PCM-Leitungen für abgehende Übertragungsrichtung (PCMg) aufweisen als Eingänge, dadurch gekennzeichnet, dass deren Informationsspeicher (IS) eine geringere Speicherkapazität aufweisen als es der Anzahl der auf den angeschlossenen PCM-Leitungen für ankommende Übertragungsrichtung je Pulsrahmen insgesamt gebildeten PCM-Wortzeitspannen entspricht, wobei bei sämtlichen Koppelfeldbausteinen (BS0 bis BS15) das wahlfreie Auslesen der abgehenden PCM-Worte derart gesteuert ist, dass die Zeitverzögerung gegenüber dem zyklischen Einschreiben der ankommenden PCM-Worte vorzugsweise innerhalb eines Zeitkanalfachs liegt, die Koppelfeldeinheit somit vorwiegend als Raum-Koppeleinheit arbeitet.

**Claim**

A time division multiplex switching network unit for the connection of a plurality of PCM-lines by means of which time channels used on PCM-lines for the incoming direction of transmission (PCMk0 to PCMk15) are assigned to time channels used on PCM-lines for the outgoing direction of transmission (PCMg0 to PCMg15) by cyclic input of the incoming PCM-words into the storage cells of its information store (IS) and by suitably delayed random read-out of the outgoing PCM-words from these storage cells, which switching network unit comprises a plurality of identical switching network modules (BS0 to BS15) each having their own store drive device (HS), where the number of these switching network modules is the quotient of the number of inputs and outputs of a switching network module whose equivalent inputs are connected to one another for the connection of PCM-lines for the incoming direction of transmission (PCMk0 to PCMk15) and which has a smaller number of outputs than inputs, for the connection of PCM-lines for the outgoing direction of transmission (PCMg) characterised in that the information stores (IS) of the switching network unit have a smaller storage capacity than corresponds to the total number of PCM-word time intervals formed on the connected PCM-lines for the incoming direction of transmission in respect of each pulse frame, where in all the switching network modules (BS0 to BS15) the random read-out of the outgoing PCM-words is controlled in such manner that the time delay relative to the cyclic input of the incoming PCM-words preferably occurs within one time channel slot and thus the switching network unit operates predominantly as a space-division switching unit.

**Revendication**

1. Unité de plage de couplage à multiplexage temporel pour le raccordement de plusieurs lignes MIC, par coordination de voies temporelles utilisées sur des lignes MIC pour le sens de transmission arrivant (PCMk0 à PCMk15) avec des voies temporelles utilisées sur des lignes MIC pour le sens de transmission sortant (PCMg0 à PCMg15), par inscription cyclique des mots MIC arrivants dans les cellules de sa mémoire d'informations (IS) et par lecture aléatoire, retardée en conséquence, des mots MIC de ces cellules de mémoire, qui est constituée d'un certain nombre de modules identiques de plages de couplage (BS0 à BS15), ayant chacun un dispositif propre d'attaque de la mémoire (HS), le nombre de ces modules de plages de couplage correspondant au quotient du nombre des entrées et du nombre des sorties d'un module de plage de couplage, dont les entrées de même ordre sont, pour le raccordement de lignes MIC pour le sens de transmission arrivant (PCMk0 à PCMk15), reliées entre elles et qui présentent, pour le raccordement de lignes MIC pour le sens de transmission sortant (PCMg), un nombre de sorties inférieur aux entrées, caractérisée en ce que ses mémoires d'informations (IS) présentent une plus faible capacité que celle correspondant au nombre total d'intervalles de mots MIC formés par trame d'impulsions sur les lignes MIC raccordées pour le sens de transmission arrivant, la lecture aléatoire des mots MIC sortants étant commandée de telle manière, pour tous les modules de plages de couplage (BS0 à BS15), que le retard par rapport à l'inscription cyclique des mots MIC arrivants est de préférence comprise dans une tranche de voie temporelle, de sorte que l'unité de plage de couplage travaille principalement comme une unité de couplage spatiale.

FIG 1

# FIG 2